# EUROPEAN PATENT APPLICATION

(11) **EP 2 042 778 A2**
(43) Date of publication of application: **01.04.2009**
(21) Application number: 08015568.2
(22) Date of filing: 03.09.2008
(51) Int. Cl.: F16H 61/664

(54) **Belt continuously variable transmission and line pressure control method thereof**

(30) Priority: 25.09.2007 JP 2007246729
(71) Applicant: JATCO Ltd, Fuji-shi, Shizuoka 417-8585 (JP)
(72) Inventor: Mori, Yasushi, Fuji-shi Shizuoka 417-8585 (JP); Chinju, Hirofumi, Fuji-shi Shizuoka 417-8585 (JP)
(74) Representative: Schmitz, Hans-Werner

(57) **Abstract**

In an area where a required primary pressure is higher than a required secondary pressure after a line pressure is controlled to an oil pressure obtained by adding a margin to a higher oil pressure of the required primary pressure and the required secondary pressure, the line pressure is gradually reduced such that the line pressure does not fall below the required primary pressure by adding a negative correction amount to the line pressure when a predetermined condition is established. Further, the line pressure is controlled back to the oil pressure obtained by adding the margin when the condition ceases to be established. When the condition ceases to be established (S8), a line pressure correction amount at this time is stored as a learned value (S9), and when the condition is reestablished (S5), the line pressure correction amount is substituted with the learned value (S6).

## Description

### FIELD OF THE INVENTION

This invention relates to control for reducing a line pressure to a minimum in a belt continuously variable transmission.

### BACKGROUND OF THE INVENTION

A belt continuously variable transmission employing a step motor is controlled such that a line pressure is reduced to a minimum in order to achieve an improvement in fuel economy. A primary pressure required to maintain a desired gear ratio is controlled using the line pressure as a base pressure, and therefore the line pressure must be controlled so as not to fall below the required primary pressure. To avoid a situation in which an actual primary pressure cannot be secured due to loss and the like in a hydraulic circuit, thereby making it impossible to achieve a target gear ratio, a primary pressure required for calculation is topped up by a margin. The line pressure is controlled on the basis of this topped-up required primary pressure. As a result, the line pressure increases by the margin, leading to deterioration of the fuel economy.

JP2004-100736A, published by the Japan Patent Office, discloses line pressure feedback control. In this line pressure feedback control, the line pressure is reduced gradually in a direction for reducing the margin when a predetermined condition, on which variation in an operating condition is comparatively gentle, has been established. Further, the line pressure is increased and decreased such that a difference between an actual gear ratio and an instructed gear ratio is held within a predetermined range.

### SUMMARY OF THE INVENTION

However, this line pressure feedback control is halted when the predetermined condition ceases to be established, and as a result, the line pressure is controlled on the basis of the required primary pressure topped up by the aforementioned margin.

When the predetermined condition is reestablished, line pressure feedback control begins again. At this time, the line pressure is controlled from the start such that the margin decreases gradually, and therefore a large amount of time is required from the start of the line pressure feedback control until the control converges.

It is therefore an object of this invention to shorten the time period required for line pressure feedback control to converge from the start of the control.

In order to achieve the above object, this invention provides a belt continuously variable transmission that comprises a primary pulley, a secondary pulley, a belt wrapped around the primary pulley and the secondary pulley, a gear ratio adjustment mechanism which adjusts a gear ratio to a target gear ratio by operating a speed change actuator to an operation position corresponding to the target gear ratio such that a V groove width of the two pulleys is modified by a differential pressure between a primary pressure and a secondary pressure, which is generated using a line pressure as a base pressure, a line pressure control unit which, in an area where a required primary pressure is higher than a required secondary pressure after the line pressure is controlled to an oil pressure obtained by adding a predetermined margin to a higher oil pressure of the required primary pressure and the required secondary pressure, gradually reduces the line pressure such that the line pressure does not fall below the required primary pressure by adding a negative correction amount to the line pressure when a predetermined gear ratio is achieved and a rate of change of the gear ratio enters a predetermined range, and controls the line pressure back to the oil pressure obtained by adding the predetermined margin to the required primary pressure when the rate of change of the gear ratio moves out of the predetermined range, a learned value storing unit which stores, as a learned value, a line pressure correction amount at a point in time when a predetermined running condition ceases to be established, the gear ratio becomes unable to reach the predetermined gear ratio, or the rate of change of the gear ratio moves out of the predetermined range while the rate of change of the gear ratio is within the predetermined range and the predetermined running condition is established, and a learned value substituting unit which substitutes the line pressure correction amount at a point in time when the predetermined gear ratio is achieved, the rate of change of the gear ratio enters the predetermined range, and the predetermined running condition is established, with the learned value.

The details as well as other features and advantages of this invention are set forth in the remainder of the specification and are shown in the accompanying drawings.

### BRIEF DESCRIPTION OF THE DRAWINGS

FIG. 1 is a schematic constitutional diagram showing a belt continuously variable transmission according to an embodiment.

FIG. 2 is a schematic diagram showing an oil pressure control unit and a CVTCU.

FIG. 3 is a block diagram showing a method of calculating a line pressure correction amount.

FIG. 4 is a flowchart showing line pressure control of the belt continuously variable transmission according to this embodiment.

FIG. 5 is a table showing upper and lower limit values of an input torque at standard R/L.

FIG. 6 is a table showing a storage area for a correction amount learned value and a margin that is added to the learned value.

FIG. 7 is a time chart showing an image of look-up/replacement and update of the correction amount learned value.

FIG. 8 is a time chart showing actions of the belt continuously variable transmission according to this embodiment.

### DESCRIPTION OF THE PREFERRED EMBODIMENTS

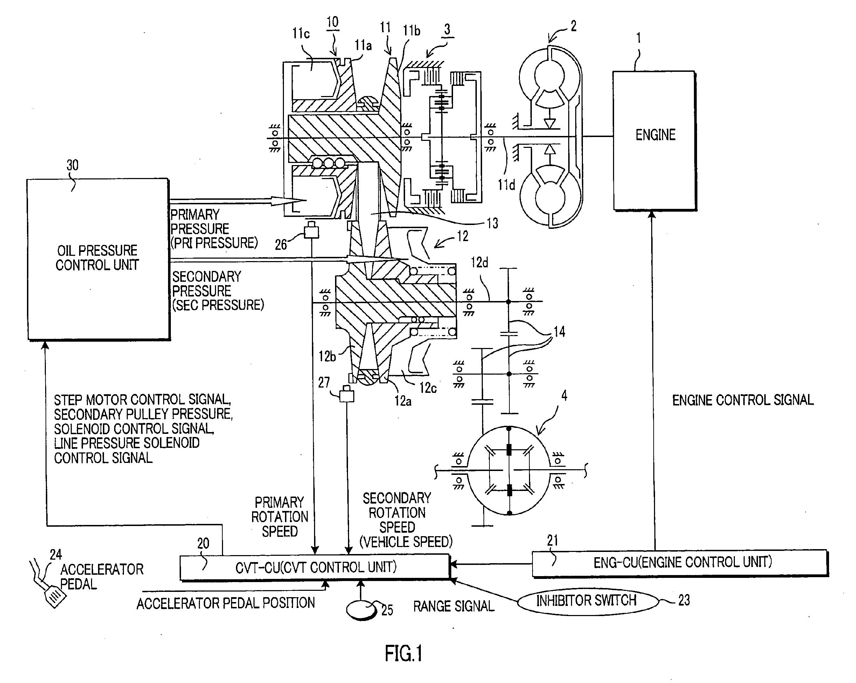

An embodiment of this invention will be described in detail below with reference to the figures and so on. FIG. 1 is a schematic constitutional diagram showing a belt type continuously variable transmission according to this embodiment. A belt type continuously variable transmission 10 comprises a primary pulley 11, a secondary pulley 12, a V belt 13, a CVT control unit 20 (to be referred to as CVTCU hereafter), and an oil pressure control unit 30. The belt continuously variable transmission 10 performs a speed change operation using the line pressure as a base pressure.

The primary pulley 11 is an input shaft side pulley which inputs the rotation of an engine 1 into the belt type continuously variable transmission 10. The primary pulley 11 comprises a fixed conical plate 11b which rotates integrally with an input shaft 11d, and a movable conical plate 11a which is disposed opposite the fixed conical plate 11b to form a V-shaped pulley groove, and which can be displaced axially by oil pressure acting on a primary pulley cylinder chamber 11c. The primary pulley 11 is connected to the engine 1 via a forward-reverse switching mechanism 3 and a torque converter 2 comprising a lockup clutch, and inputs the rotation of the engine 1. The rotation speed of the primary pulley 11 is detected by a primary pulley rotation speed sensor 26.

The V belt 13 is wrapped around the primary pulley 11 and secondary pulley 12 such that the rotation of the primary pulley 11 is transmitted to the secondary pulley 12.

The secondary pulley 12 outputs the rotation transmitted by the V belt 13 to a differential 4. The secondary pulley 12 comprises a fixed conical plate 12b which rotates integrally with an output shaft 12d, and a movable conical plate 12a which is disposed opposite the fixed conical plate 12b to form a V-shaped pulley groove, and which can be displaced axially in accordance with oil pressure acting on a secondary pulley cylinder chamber 12c. It should be noted that the pressure-receiving surface area of the secondary pulley cylinder chamber 12c is set substantially equally to the pressure-receiving surface area of the primary pulley cylinder chamber 11c.

The secondary pulley 12 is connected to the differential 4 via an idler gear 14 and an idler shaft, and outputs rotation to the differential 4. The rotation speed of the secondary pulley 12 is detected by a secondary pulley rotation speed sensor 27. The vehicle speed can be calculated from the rotation speed of the secondary pulley 12.

The CVTCU 20 determines the gear ratio and a contact frictional force on the basis of signals from an inhibitor switch 23, an accelerator pedal position sensor 24, an oil temperature sensor 25, the primary pulley rotation speed sensor 26, the secondary pulley rotation speed sensor 27, and so on, as well as input torque information from an engine control unit 21, and controls the belt type continuously variable transmission 10 by transmitting commands to the oil pressure control unit 30.

The oil pressure control unit 30 operates on the basis of the commands from the CVTCU 20. The oil pressure control unit 30 supplies oil pressure to the primary pulley 11 and secondary pulley 12, thereby causing the movable conical plate 11a and the movable conical plate 12a to reciprocate in a rotary axis direction.

When the movable conical plate 11a and the movable conical plate 12a move, the pulley groove width varies, and as a result, the V belt 13 moves over the primary pulley 11 and secondary pulley 12. Thus, the contact radius between the V belt 13 and the primary pulley 11 and secondary pulley 12 varies, whereby the gear ratio and the contact frictional force of the V belt 13 are controlled.

The rotation of the engine 1 is input into the belt type continuously variable transmission 10 via the torque converter 2 and the forward-reverse switching mechanism 3 and transmitted from the primary pulley 11 to the differential 4 via the V belt 13 and secondary pulley 12.

When the accelerator pedal is depressed or a shift change is performed in a manual mode, the movable conical plate 11a of the primary pulley 11 and the movable conical plate 12a of the secondary pulley 12 are axially displaced, thereby varying the contact radius thereof with the V belt 13 such that the gear ratio is varied continuously.

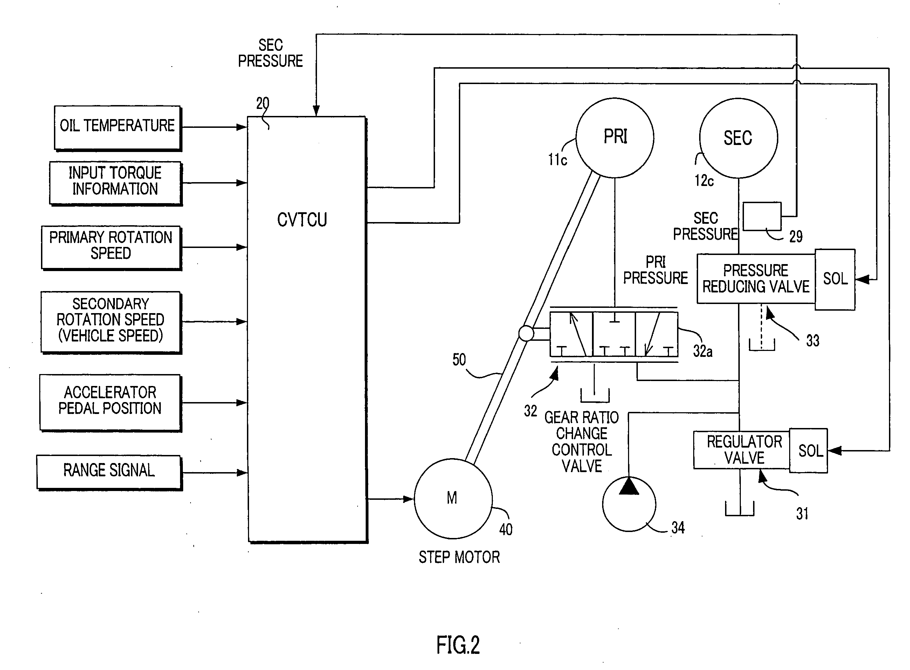

FIG. 2 is a schematic diagram of the oil pressure control unit and the CVTCU.

The oil pressure control unit 30 comprises a regulator valve 31, a gear ratio change control valve 32, and a pressure reducing valve 33. The oil pressure control unit 30 controls oil pressure supplied by a hydraulic pump 34, and supplies the oil pressure to the primary pulley 11 and secondary pulley 12.

The regulator valve 31 is a pressure regulating valve which comprises a solenoid and regulates the pressure of the oil pumped by the hydraulic pump 34 to a predetermined line pressure in accordance with a command (for example, a duty signal or the like) from the CVTCU 20.

The gear ratio change control valve 32 is a control valve that controls the oil pressure (primary pressure hereafter) in the primary pulley cylinder chamber 11c to a desired target pressure. The gear ratio change control valve 32 is connected to a servo link 50 constituting a mechanical feedback mechanism. The gear ratio change control valve 32 is driven by a step motor 40 connected to one end of the servo link 50, and receives feedback regarding the groove width, or in other words the actual gear ratio, from the movable conical plate 11a of the primary pulley 11, which is connected to the other end of the servo link 50. The gear ratio change control valve 32 regulates the primary pressure by supplying and discharging oil pressure to and from the primary pulley cylinder chamber 11c through displacement of a spool 32a, thereby realizing a target gear ratio which is indicated by a drive position of the step motor 40, and when the speed change is actually complete, the gear ratio change control valve 32 receives the displacement from the servo link 50 and holds the spool 32a in a closed position.

The pressure reducing valve 33 is a control valve which comprises a solenoid and controls pressure (secondary pressure hereafter) supplied to the secondary pulley cylinder chamber 12c to a desired target pressure.

The line pressure supplied by the hydraulic pump 34 and regulated by the regulator valve 31 is supplied to the gear ratio change control valve 32 and the pressure reducing valve 33, respectively.

The gear ratio of the primary pulley 11 and secondary pulley 12 is controlled by the step motor 40, which is driven in accordance with a speed change command signal from the CVTCU 20. The spool 32a of the gear ratio change control valve 32 is driven in accordance with the displacement of the servo link 50, which operates in conjunction with the step motor 40, and thus the line pressure supplied to the gear ratio change control valve 32 is regulated such that the primary pressure is supplied to the primary pulley 11. As a result, the groove width is variably controlled and set to a predetermined gear ratio.

The CVTCU 20 variably controls the gear ratio and the contact frictional force of the V belt 13 by reading a range signal from the inhibitor switch 23, an accelerator pedal position from the accelerator pedal position sensor 24, an oil temperature of the belt type continuously variable transmission 10 from the oil temperature sensor 25, signals from the primary pulley rotation speed sensor 26, the secondary pulley rotation speed sensor 27, an oil pressure sensor 29, and so on. It should be noted that the oil pressure sensor 29 is a sensor which detects the secondary pressure applied to the secondary pulley cylinder chamber 12c.

The CVTCU 20 determines a target gear ratio in accordance with the vehicle speed, the throttle opening, and so on, and drives the step motor 40 to control the current gear ratio toward the target gear ratio. Further, the CVTCU 20 calculates a target value of the line pressure to an oil pressure obtained by adding a margin to the larger of the oil pressure supplied to the primary pulley 11 and secondary pulley 12 on the basis of the input torque information, gear ratio, and oil temperature. The CVTCU 20 then subjects the line pressure to feedback control by driving the solenoid of the regulator valve 31 such that the line pressure matches the target value. The CVTCU 20 then determines a target value of the secondary pressure and controls the secondary pressure through feedback control by driving the solenoid of the pressure reducing valve 33 in accordance with the detection value of the oil pressure sensor 29 and the target value.

By keeping the line pressure, which serves as the base pressure of the primary pressure, as low as possible, the load on the hydraulic pump is reduced, leading to an improvement in fuel economy. Hence, in a steady-state operating condition where a rate of change of the gear ratio is within a predetermined range, the line pressure is reduced gradually by adding a negative correction amount to the line pressure. At the same time, the line pressure is feedback-controlled on the basis of a deviation between the actual gear ratio and the target gear ratio such that the line pressure does not fall below the primary pressure.

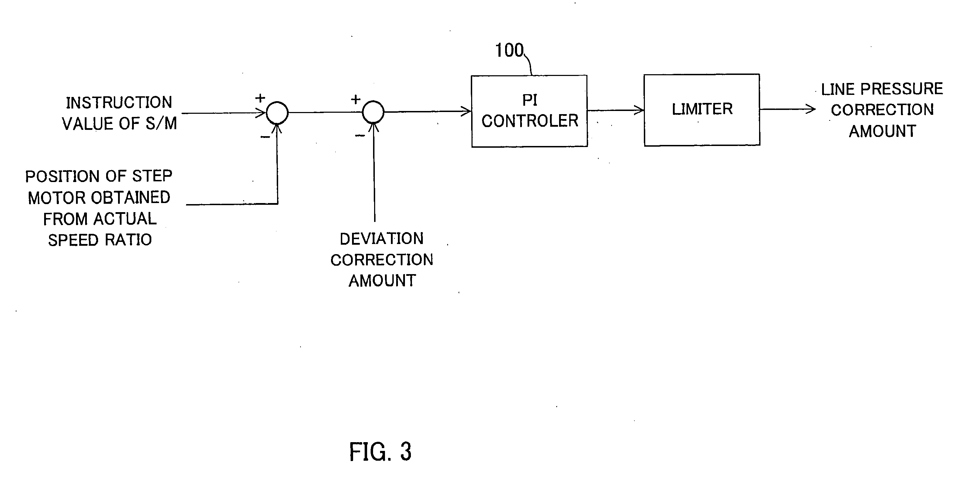

Here, the line pressure correction amount is calculated as shown in the block diagram in FIG. 3. First, a deviation between an instruction value of the step motor 40 corresponding to the target gear ratio and a position of the step motor 40 obtained from the actual gear ratio is calculated, whereupon a deviation correction amount is subtracted from the deviation. The value obtained in this manner is input into a PI controller 100, whereupon an upper limiter, a lower limiter, and a reduction limiter are applied to the output value of the PI controller 100 to calculate the line pressure correction amount. It should be noted that the deviation correction amount is determined in consideration of step offset, which is dependent on attachment irregularities and the torque of the step motor 40.

Since the line pressure correction amount is limited by limiters during line pressure feedback control in this manner, the line pressure cannot be reduced dramatically at one time. In other words, a certain amount of time is required for the line pressure feedback control to converge from the start of the control. However, the fuel economy improvement effect decreases as this amount of time increases, and therefore the line pressure is preferably reduced as quickly as possible following the start of the line pressure feedback control.

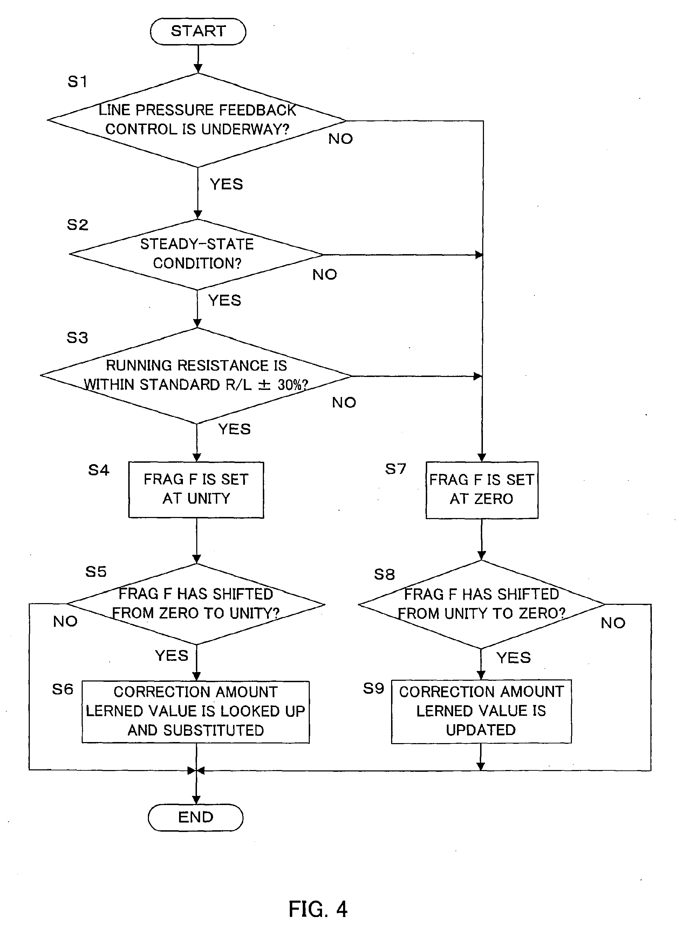

Hence, in this embodiment control shown in the flowchart in FIG. 4 is performed in addition to normal line pressure feedback control. FIG. 4 is a flowchart showing line pressure control according to this embodiment. This control is performed repeatedly at predetermined very short intervals (of 10ms, for example).

In a step S 1, a determination is made as to whether or not line pressure feedback control is underway. When line pressure feedback control is underway, the routine advances to a step S2, and when line pressure feedback control is not underway, the routine advances to a step S7.

Line pressure feedback control is performed when conditions according to which the shift position is in the D range, the oil temperature is equal to or greater than 10°, idling is not underway, and the gear ratio rate of change is no smaller than -0.1 and smaller than 0.1 are all satisfied. Line pressure feedback control is halted when at least one of the following conditions is satisfied: the vehicle is stationary; the step motor is undergoing initialization; a mode prohibiting Lowest is in force; minimum control of the line pressure is underway; the temperature is extremely low; an abnormality has occurred in the vehicle speed sensor; an abnormality has occurred in the primary rotation speed sensor; an abnormality has occurred in the step motor; the line pressure instruction value is equal to or greater than a line pressure upper limit value; and the target gear ratio is greater than one.

When line pressure feedback control is halted, normal hydraulic control is performed. In other words, the line pressure is raised again to an oil pressure obtained by adding a margin to the larger of the oil pressure supplied to the primary pulley 11 and secondary pulley 12 on the basis of the input torque information, gear ratio, and oil temperature.

In the step S2, a determination is made as to whether or not the operating condition is a steady-state condition. If so, the routine advances to a step S3, and if not, the routine advances to a step S7.

A steady-state condition indicates that neither acceleration nor deceleration is underway. The operating condition is determined to be in a steady-state condition when all of the following conditions are satisfied: a difference between a maximum value and a minimum value of the rotation speed of the secondary pulley 12 within a predetermined time period is equal to or smaller than a predetermined value; a difference between the current value of the input torque and a value of 100ms previous is equal to or smaller than a predetermined value; a difference between the current value of the gear ratio and a value of 100ms previous is equal to or smaller than a predetermined value; and the oil temperature is no lower than 60°C and no higher than 100°C.

In the step S3, a determination is made as to whether or not a running resistance is within standard R/L ± 30%. When the running resistance is within standard R/L ± 30%, the routine advances to a step S4, and when the running resistance is not within standard R/L ± 30%, the routine advances to the step S7.

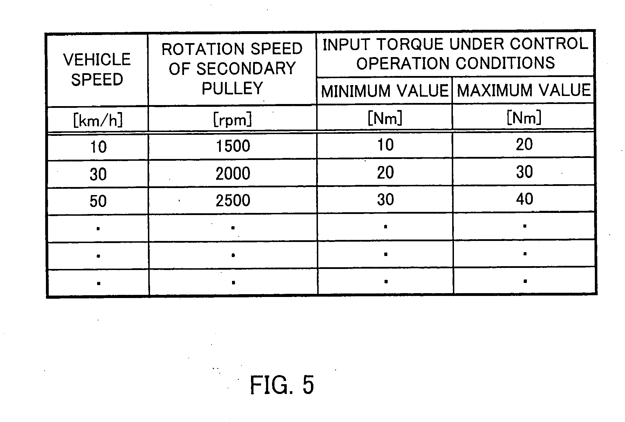

The determination as to whether or not the running resistance is within standard R/L ± 30% is made by referring to a table shown in FIG. 5. Standard R/L is a standard running resistance condition. A standard condition means that gradient resistance is ± 0% (a flat road) or the vicinity thereof, the vehicle weight is a standard weight, and there is no wind. A standard weight denotes the dry weight of the vehicle + the weight of two passengers + α. The table in FIG. 5 shows, from the left, the vehicle speed, the rotation speed of the secondary pulley 12 corresponding to the vehicle speed, the input torque of the primary pulley 11 when the running resistance is standard R/L - 30% (a minimum value of the input torque under the control operation conditions), and the input torque of the primary pulley 11 when the running resistance is standard R/L + 30% (a maximum value of the input torque under the control operation conditions). It should be noted that the determination as to whether or not the running resistance is standard R/L ± 30% is made after determining that the vehicle speed is within a range of predetermined values (for example, no lower than 30km/h and lower than 120km/h).

Referring to this table, the maximum value and minimum value of the input torque under the control operation conditions corresponding to the rotation speed of the secondary pulley 12 are looked up. Between sections, the maximum value and minimum value are determined through linear interpolation. When the torque of the primary pulley 11, which is the input torque at this time, is between the maximum value and minimum value of the input torque under the control operation conditions, looked up from the table, it is determined that the running resistance is within standard R/L ± 30%. For example, if the torque of the primary pulley 11 is no lower than 30Nm and no higher than 40Nm when the rotation speed of the secondary pulley 12 is 2500rpm, it is determined that the running resistance is within standard R/L ± 30%.

In the step S4, a flag F is set at unity. In other words, the flag F is set at unity when all of the conditions in the steps S 1 to S3 are satisfied.

In a step S5, a determination is made as to whether or not the flag F has shifted from zero to unity. If the flag F has shifted from zero to unity, the routine advances to a step S6, and if the flag F has not shifted from zero to unity, the processing is terminated.

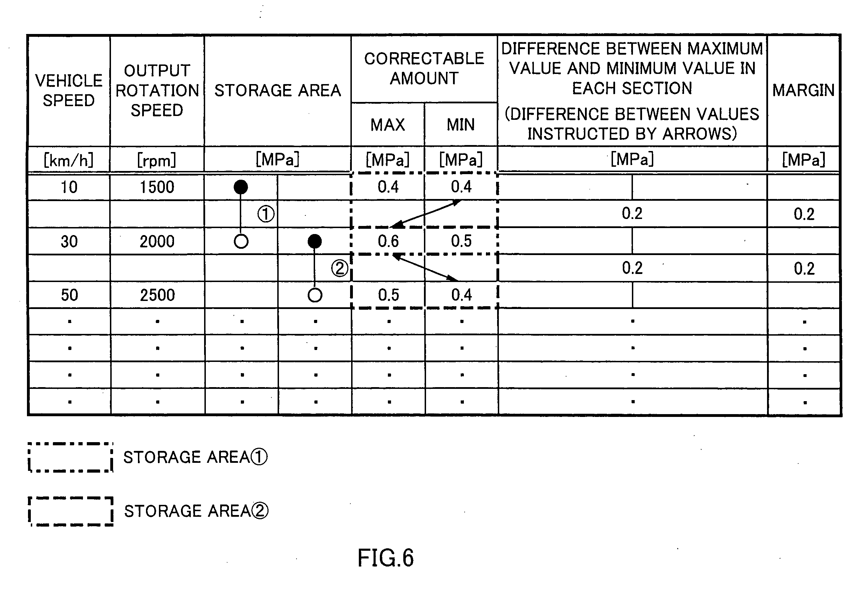

In a step S6, a correction amount learned value is looked up and substituted. The correction amount learned value is looked up and substituted by referring to a table shown in FIG. 6. The table in FIG. 6 shows, from the left, the vehicle speed, the rotation speed of the secondary pulley 12 corresponding to the vehicle speed, a learned value, a maximum value and a minimum value of a correctable amount, a difference between the maximum value and minimum value of the correctable amount in each section, and a margin. The vehicle speed is compartmentalized to plural areas in a similar manner to the vehicle speed in FIG. 5 (10 areas, for example), each value being set in each area. The learned value is obtained when a value updated in a step S9, to be described below, is stored in a corresponding region at the time of the update. As shown by the arrows in FIG. 6, the margin is a value determined as a difference between the maximum value and minimum value of the correctable amounts on the boundaries on either side of a single storage area. The margin is added to the learned value for safety when the learned value is replaced in a single storage area so that the learned value does not fall below the required line pressure in that storage area.

A procedure for looking up and substituting the correction amount learned value will now be described in detail. On the basis of the current rotation speed of the secondary pulley 12, the learned value in the corresponding area is looked up. The margin in the corresponding area is then added to the looked up learned value to determine a look-up value. When the look-up value is negative, the look-up value is compared with the correction amount obtained through line pressure feedback control, and the smaller of the two (the one having the larger absolute value) is inserted as a new line pressure feedback control correction amount. When the look-up value is positive, the line pressure feedback control correction amount is not substituted with the look-up value.

In the step S7, the flag F is set at zero. In other words, the flag F is set at zero when any one of the conditions in the steps S 1 to S3 ceases to be satisfied.

In a step S8, a determination is made as to whether or not the flag F has shifted from unity to zero. If the flag F has shifted from unity to zero, the routine advances to a step S9, and if the flag F has not shifted from unity to zero, the processing is terminated.

In the step S9, the correction amount learned value is updated. To update the correction amount learned value, the learned value in the area to which the current rotation speed of the secondary pulley 12 belongs in the table in FIG. 6 is updated to the current correction amount obtained through line pressure feedback control.

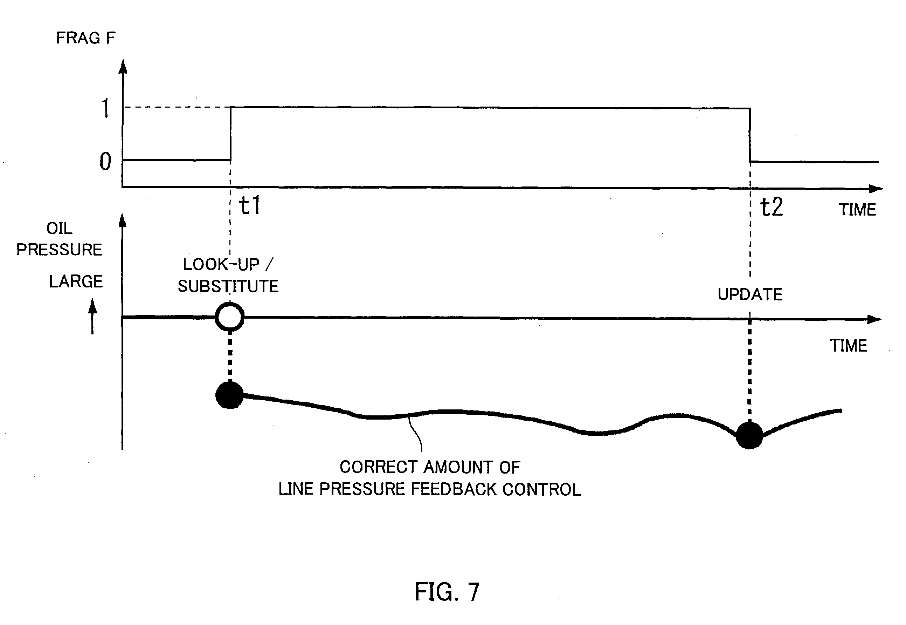

FIG. 7 shows an image of look-up/substitution and update of the correction amount learned value in the steps S6 and S9. When the flag F shifts from zero to unity at a time t1, a determination is made as to whether or not the look-up value obtained by adding the margin to the learned value looked up on the basis of the rotation speed of the secondary pulley 12 at this time is smaller than the line pressure feedback control correction amount. When the look-up value is smaller than the correction amount, the correction amount is substituted with the look-up value.

Then, when the flag F shifts from unity to zero at a time t2, the line pressure feedback control correction amount at this time is stored as the learned value of the corresponding area in the table in FIG. 6. Therefore, when the flag F subsequently shifts back to unity from zero and the rotation speed of the secondary pulley 12 at that time is in the same area as that of the time t2, the learned value updated at the time t2 is used.

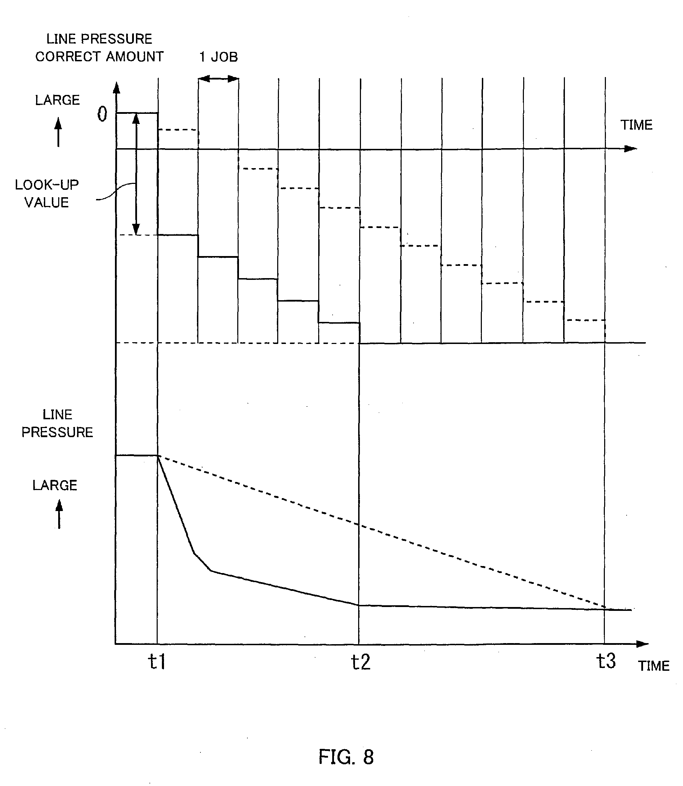

Next, actions of the line pressure control device for a belt continuously variable transmission according to this embodiment will be described with reference to FIG. 8. FIG. 8 is a time chart showing variation in the line pressure correction amount and the line pressure, in which the dotted lines show a conventional example and the solid lines show this embodiment.

When the flag F shifts from zero to unity at a time t1 such that the correction amount learned value is substituted, the line pressure feedback control correction amount decreases greatly. Thereafter, the correction amount continues to decrease gradually due to line pressure feedback control such that at a time t2, the correction amount converges. The line pressure decreases similarly in accordance with the correction amount.

In the conventional example, as shown by the dotted lines, the line pressure does not converge until a time t3, and therefore the time required for convergence is shortened by a time period of (t3-t2).

In the embodiment described above, when predetermined running conditions cease to be established, the line pressure feedback control correction amount at that time is stored as a learned value, and when the predetermined running conditions are reestablished, the line pressure feedback control correction amount is substituted with the stored learned value. Hence, the time required for the correction amount to converge from the start of line pressure feedback control can be shortened in comparison with a case in which the correction amount decreases gradually from the start. Accordingly, the line pressure can be caused to decrease for a longer time period, enabling a corresponding reduction in friction in the oil pump and so on in the interior of the unit, and an improvement in fuel economy.

The learned value is stored in one of a plurality of areas in accordance with the rotation speed of the secondary pulley 12 (the vehicle speed) at the point in time when the learned value is stored. Further, the correction amount is substituted with one learned value from among the learned values stored in the plurality of areas in accordance with the rotation speed of the secondary pulley 12 (the vehicle speed) at the point in time when the correction amount is substituted with the learned value. Hence, even when the correction amount varies greatly in accordance with the vehicle speed, an appropriate correction amount can be looked up and substituted.

The learned value is read in accordance with the rotation speed of the secondary pulley 12 (the vehicle speed) at the point in time when the line pressure feedback control correction amount is substituted with the learned value, and the look-up value is calculated by adding a predetermined margin to the read learned value. At this time, when the look-up value is positive, the line pressure feedback control correction amount is not substituted with the learned value, and when the look-up value is negative, the correction amount is substituted with the smaller of the look-up value and the correction amount. In so doing, a situation in which the look-up value obtained by adding the margin to the learned value corrects the line pressure in a pressure-increasing direction such that a reduction in the line pressure, which is the original object of this control, cannot be achieved, for example, can be avoided. Accordingly, the oil pressure can be reduced reliably, enabling a more reliable improvement in fuel economy.

Further, the predetermined running conditions are satisfied when the conditions of both the step S2 and the step S3 are satisfied, i.e. all of the conditions which the vehicle is in neither an acceleration state nor a deceleration state, gradient resistance and wind are substantially non-existent, and the oil temperature is within a predetermined range, are satisfied. Therefore, the line pressure feedback control correction amount is only replaced when the vehicle is in a substantially steady-state operating condition, and as a result, the line pressure can be reduced as far as possible while preventing a deficiency in the primary pressure due to reduction of the line pressure.

This application claims priority from Japan Patent Application 2007-246729, filed September 15, 2007, which is incorporated herein by reference in its entirety.

## Claims

1. A belt continuously variable transmission (10) comprising:
a primary pulley (11);
a secondary pulley (12);
a belt (13) wrapped around the primary pulley (11) and the secondary pulley (12);
a gear ratio adjustment mechanism which adjusts a gear ratio to a target gear ratio by operating a speed change actuator (40) to an operation position corresponding to the target gear ratio such that a V groove width of the two pulleys (11, 12) is modified by a differential pressure between a primary pressure, which is generated using a line pressure as a base pressure, and a secondary pressure;
line pressure control means for gradually reducing the line pressure in an area where a required primary pressure is higher than a required secondary pressure after the line pressure is controlled to an oil pressure obtained by adding a predetermined margin to a higher oil pressure of the required primary pressure and the required secondary pressure such that the line pressure does not fall below the required primary pressure by adding a negative correction amount to the line pressure when a predetermined gear ratio is achieved and a rate of change of the gear ratio enters a predetermined range, and controlling the line pressure back to the oil pressure obtained by adding the predetermined margin to the required primary pressure when the rate of change of the gear ratio moves out of the predetermined range;
learned value storing means for storing, as a learned value, a line pressure correction amount at a point in time when a predetermined running condition ceases to be established, the gear ratio becomes unable to reach the predetermined gear ratio, or the rate of change of the gear ratio moves out of the predetermined range while the rate of change of the gear ratio is within the predetermined range and the predetermined running condition is established; and
learned value substituting means for substituting the line pressure correction amount at a point in time when the predetermined gear ratio is achieved, the rate of change of the gear ratio enters the predetermined range, and the predetermined running condition is established, with the learned value.

2. The belt continuously variable transmission (10) as defined in Claim 1, wherein the learned value storing means stores the learned value in one of a plurality of areas in accordance with a traveling condition at a point in time when the learned value is stored, and
the learned value substituting means substitutes the line pressure correction amount with one of the learned values stored in the plurality of areas in accordance with the traveling condition at a point in time when the line pressure correction amount is replaced by the learned value.

3. The belt continuously variable transmission (10) as defined in Claim 2, wherein the traveling condition is a vehicle speed.

4. The belt continuously variable transmission (10) as defined in Claim 2, wherein the learned value substituting means reads the learned value in accordance with the traveling condition at the point in time when the line pressure correction amount is substituted with the learned value, and calculates a look-up value by adding a predetermined margin to the read learned value, such that the line pressure correction amount is not substituted with the learned value when the look-up value is positive, but the line pressure correction amount is substituted with a smaller value of the look-up value and the correction amount when the look-up value is negative.

5. The belt continuously variable transmission (10) as defined in Claim 1, wherein the predetermined running condition is established when a vehicle is in neither an acceleration condition nor a deceleration condition, a torque of the primary pulley (11) is within a predetermined range based on the torque of the primary pulley (11) during travel on a flat road with no wind, and an oil temperature is within a predetermined steady-state range.

6. A line pressure control method for a belt continuously variable transmission (10) in which a belt is wrapped around a primary pulley (11) and a secondary pulley (12) and a gear ratio is adjusted to a target gear ratio by operating a speed change actuator (40) to an operation position corresponding to the target gear ratio such that a V groove width of the two pulleys (11, 12) is modified by a differential pressure between a primary pressure, which is generated using a line pressure as a base pressure, and a secondary pressure, the method comprising:
gradually reducing the line pressure in an area where a required primary pressure is higher than a required secondary pressure after the line pressure is controlled to an oil pressure obtained by adding a predetermined margin to a higher oil pressure of the required primary pressure and the required secondary pressure such that the line pressure does not fall below the required primary pressure by adding a negative correction amount to the line pressure when a predetermined gear ratio is achieved and a rate of change of the gear ratio enters a predetermined range, and controlling the line pressure back to the oil pressure obtained by adding the predetermined margin to the required primary pressure when the rate of change of the gear ratio moves out of the predetermined range;
storing, as a learned value, a line pressure correction amount at a point in time when a predetermined running condition ceases to be established, the gear ratio becomes unable to reach the predetermined gear ratio, or the rate of change of the gear ratio moves out of the predetermined range while the rate of change of the gear ratio is within the predetermined range and the predetermined running condition is established; and
substituting the line pressure correction amount at a point in time when the predetermined gear ratio is achieved, the rate of change of the gear ratio enters the predetermined range, and the predetermined running condition is established, with the learned value.

7. The line pressure control method as defined in Claim 6, wherein storing the line pressure correction amount as a learned value stores the learned value in one of a plurality of areas in accordance with a traveling condition at a point in time when the learned value is stored, and
substituting the line pressure correction amount with the learned value substitutes the line pressure correction amount with one of the learned values stored in the plurality of areas in accordance with the traveling condition at a point in time when the line pressure correction amount is substituted with the learned value.

8. The line pressure control method as defined in Claim 7, wherein the traveling condition is a vehicle speed.

9. The line pressure control method as defined in Claim 7, wherein storing the line pressure correction amount as a learned value reads the learned value in accordance with the traveling condition at the point in time when the line pressure correction amount is substituted with the learned value and calculates a look-up value by adding a predetermined margin to the read learned value, such that the line pressure correction amount is not substituted with the learned value when the look-up value is positive, but the line pressure correction amount is substituted with a smaller value of the look-up value and the correction amount when the look-up value is negative.

10. The line pressure control method as defined in Claim 6, wherein the predetermined running condition is established when a vehicle is in neither an acceleration condition nor a deceleration condition, a torque of the primary pulley (11) is within a predetermined range based on the torque of the primary pulley (11) during travel on a flat road with no wind, and an oil temperature is within a predetermined steady-state range.
